(19) Europäisches Patentamt
European Patent Office
Office européen des brevets

(11) **EP 1 866 123 B1**

(12) **EUROPÄISCHE PATENTSCHRIFT**

(45) Veröffentlichungstag und Bekanntmachung des Hinweises auf die Patenterteilung:
**15.09.2010 Patentblatt 2010/37**

(21) Anmeldenummer: 06724007.7

(22) Anmeldetag: **04.04.2006**

(51) Int Cl.:
***B23P 19/06*** (2006.01) ***B25B 29/02*** (2006.01)

(86) Internationale Anmeldenummer:
**PCT/EP2006/003050**

(87) Internationale Veröffentlichungsnummer:
**WO 2006/105931 (12.10.2006 Gazette 2006/41)**

(54) **HYDRAULISCHE GEWINDEBOLZENSPANNVORRICHTUNG UND VERFAHREN ZUM ANZIEHEN VON GROSSEN SCHRAUBEN MITTELS DER HYDRAULISCHEN GEWINDEBOLZENSPANNVORRICHTUNG**

HYDRAULIC THREADED BOLT CLAMPING DEVICE AND METHOD FOR TIGHTENING LARGE SCREWS BY MEANS OF SAID HYDRAULIC THREADED BOLT CLAMPING DEVICE

DISPOSITIF HYDRAULIQUE DE SERRAGE DE BOULONS FILETÉS ET PROCÉDÉ POUR SERRER DES GROSSES VIS AU MOYEN DE CE DISPOSITIF HYDRAULIQUE DE SERRAGE DE BOULONS FILETÉS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **06.04.2005 DE 102005015922**

(43) Veröffentlichungstag der Anmeldung:
**19.12.2007 Patentblatt 2007/51**

(73) Patentinhaber:
• **Hohmann, Jörg**
  **59872 Meschede (DE)**
• **Hohmann, Frank**
  **59581 Warstein (DE)**

(72) Erfinder:
• **Hohmann, Jörg**
  **59872 Meschede (DE)**
• **Hohmann, Frank**
  **59581 Warstein (DE)**

(74) Vertreter: **Christophersen, Ulrich Rudolf et al**
**Christophersen & Partner**
**Patentanwälte**
**Feldstrasse 73**
**40479 Düsseldorf (DE)**

(56) Entgegenhaltungen:
WO-A-86/05135      WO-A-2006/000677
DE-A1- 2 846 668      DE-A1- 10 145 847
GB-A- 2 267 943      US-A- 5 257 207

EP 1 866 123 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine hydraulische Gewindebolzenspannvorrichtung zum Anziehen und Lösen von großen Schrauben und ein Verfahren zum Anziehen derartiger Schrauben mittels der Gewindebolzenspannvorrichtung gemäß der Oberbegriffe des Ansprüche 1 und 7 mit einer Druckmittelzufuhr zur Gewindebolzenspannvorrichtung, einem Druckmittelanschluss an der Gewindebolzenspannvorrichtung, einem sich auf einen mittels eines Gewindebolzens und einer Mutter zu verspannenden Maschinenteil abstützenden Zylinder, wenigstens einem darin abgedichtet geführten, sich an einer am Gewindeende des Gewindebolzens aufgeschraubten Gewindebuchse abstützenden, periodisch druckbeaufschlagten Kolben und einer Steuereinrichtung zum Ansteuern der Druckmittelzufuhr zur Gewindebolzenspannvonichtung.

Eine solche Vorrichtung bzw. ein solchen Verfahrens ist aus der US-A- 5 257 207 bekannt, welches den nächstliegenden Stand der Technik bildet.

Um eine genaue Kenntnis der Schraubenvorspannung zu erhalten, ist es bekannt, die erreichte Schraubendehnung direkt zu messen, da die Schraubendehnung auf Grund des Hook'schen Gesetzes direkt proportional zur Schraubenvorspannung ist. Diese Messung der Dehnung lässt sich auf unterschiedliche Weise bewerkstelligen.

Gemäß der DE 28 46 668 A1 kann der zu spannende Gewindebolzen auf seiner ganzen Länge durchbohrt sein, und in diese Bohrung lässt sich ein Messstab einführen, dessen Länge im Wesentlichen der Gewindebolzenlange entsprechen sollte und der an der Dehnung des Gewindebolzens nicht teilnimmt, so dass sich die Dehnung des Gewindebolzens aus der Längendifferenz zwischen dem Messstab und dem Gewindebolzen ergibt

Dieses Messverfahren ist aufwendig, da jeder Gewindebolzen durchbohrt sein muss und der Messstab bei jedem Spannen des Gewindebolzens in die Bohrung eingeführt und mit einer geeigneten Messvorrichtung verbunden werden muss.

Bei einer in der DE 101 45 847 A1 derselben Anmelder beschriebenen hydraulischen Gewindebolzenspannvorrichtung wird ein Messverfahren angewandt, das darin besteht, die Gewindebolzendehnung aus dem gemessenen Mutterndrehwinkel zu ermitteln, da auf Grund der jeweiligen Gewindesteigung ein konstantes Verhältnis zwischen dem Mutterndrehwinkel und der Gewindebolzendehnung besteht. Bei diesem Messverfahren ist es erforderlich, die Mutter zunächst bis zum spielfreien Setzen aller durch den Gewindebolzen zu spannenden Bauelemente beizudrehen und nur den Mutterndrehwinkel ab dem so ermittelten Fügepunkt zu berücksichtigen.

Die beiden bekannten Messverfahren erlauben es, die Gewindebolzendehnung auf Grund der Druckbeaufschlagung der hydraulischen Gewindebolzenspannvorrichtung mit ausreichender Genauigkeit zu ermitteln und das Anziehen großer Schrauben weitgehend zu automatisieren, erfordern dafür jedoch einen erhöhten apparativen Aufwand.

Der Erfindung liegt die Aufgabe zu Grunde, eine hydraulische Gewindebolzenspannvorrichtung und ein Verfahren zum Anziehen großer Schrauben mittels einer solchen hydraulischen Gewindebolzenspannvorrichtung vorzuschlagen, die mit geringem apparativen Aufwand eine genaue Feststellung der verbleibenden Dehnung des Gewindebolzens nach Druckentlasten der Gewindebolzenspannvorrichtung festzustellen erlauben, ohne dass eine direkte Messung der Dehnung des Gewindebolzens mittels eines Messstabs oder über den Mutterndrehwinkel erforderlich ist.

Diese Aufgabe wird erfindungsgemäß durch eine Vorrichtung mit den Merkmalen des Anspruchs 1 gelöst.

Ausgehend von dieser Aufgabenstellung wird eine hydraulische Gewindebolzenspannvorrichtung der eingangs erwähnen Art vorgeschlagen, die eine Steuereinrichtung zum Ansteuern der Druckmittelzufuhr zur Gewindebolzenspannvorrichtung und zum Abschalten der Druckmittelzufuhr nach Erreichen eines der Soll-Vorspannung entsprechenden Solldrucks, eine Eingabevorrichtung für eine Soll-Schraubenvorspannkraft eine Messeinrichtung zum Messen der relative Verschiebung des Gewindeendes des Gewindebolzens gegenüber dem Zylinder und eine Auswerteeinrichtung zum Ermitteln der verbleibenden Schraubenvorspannung nach Druckentlastung der Gewindebolzenspannvorrichtung, umfasst

Die Erfindung geht von der Überlegung aus, dass sich die Soll-Schraubenvorspannhaft und die daraus resultierende Schraubendehnung aus den Abmessungen der Schraube auf Grund der bekannten Gesetzmäßigkeiten auf einfache Weise berechnen lässt. Diese Soll-Schraubenvorspannkraft lässt sich mittels der hydraulischen Gewindebolzenspannvorrichtung aufbringen, wobei die Schraubenvorspannkraft gleich dem Hydraulikdruck der Druckmittelzufuhr multipliziert mit der Kolbenfläche der hydraulischen Gewindebolzenspannvorrichtung ist. Hierfür ist die Kenntnis der Schraubendehnung nicht erforderlich. Sehr wichtig ist es indessen, die verbleibende Ist-Schraubenvorspannung nach dem Beidrehen der jeweiligen Mutter nach Druckentlastung der Gewindebolzenspannvorrichtung zu kennen, da bei der Druckentlastung der Gewindebolzenspannvorrichtungen Setzerscheinungen auftreten. Um nun die verbleibende Ist-Schraubenvorspannung zu kennen, genügt es, die Dehnungsdifferenz zwischen dem Zustand, in der die hydraulische Gewindebolzenspannvorrichtung mit dem Solldruck beaufschlagt ist und dem Zustand nach Beidrehen der Mutter und der Druckentlastung der Gewindebolzenspannvorrichtung zu messen. Diese gemessene Differenz lässt sich auf Grund des Hook'schen Gesetzes direkt in eine Schraubenvorspannungsdifferenz umrechnen und die verbleibende Ist-Schraubenvorspannung ist dann gleich der um diese Differenz verminderte Wert der Schraubenvorspannung bei der Druckbeaufschlagung der Gewindebolzenspannvorrichtung mit dem Soll-Wert.

Die Dehnungsmessvorrichtung braucht somit nur die Verschiebung des Gewindeendes des Gewindebolzens gegenüber dem Zylinder der Gewindebolzenspannvorrichtung zu messen, wofür kein durchbohrter Gewindebolzen erforderlich ist. Vielmehr genügt es, mittels der Messvorrichtung die Position des Gewindeendes des Gewindebolzens bei Erreichen des Solldrucks und nach der Druckentlastung der Gewindebolzenspannvorrichtung und dem Beidrehen der Mutter zu messen, was ohne besonderen apparativen Aufwand möglich ist und keine Veränderungen an einem üblichen Gewindebolzen erfordert.

Für die Feststellung, ob eine festgestellte; verbleibende Ist-Schraubenvorspannung einer verbleibenden Soll-Schraubenvorspannung entspricht, können die Auswerteeinrichtung und eine Eingabevorrichtung für eine verbleibende Soll-Schraubenvorspannkraft mit der Steuereinrichtung verbunden sein und eine Vergleichseinrichtung zum Vergleichen der festgestellten, verbleibenden Ist-Schraubenvorspannung mit einer verbleibenden Soll-Schraubenvorspannung aufweisen, wobei die Auswerteeinrichtung vorzugsweise eine Steuersignaleinrichtung zum Ansteuern der Druckmittelzufuhr zur Gewindebolzenspannvorrichtung über die Steuereinrichtung zum erneuten Druckbeaufschlagen der Gewindebolzenspannvorrichtung mit einem erhöhten Solldruck, falls die festgestellte bleibende Ist-Schraubenvorspannung unterhalb eines vorgegebenen Sollwerts liegt, aufweisen kann.

Durch diese Maßnahme lässt sich der Schraubenspannvorgang vollständig automatisieren, ohne dass es eines Eingriffs durch die Bedienungsperson bedarf.

Die Messeinrichtung kann aus einem durch eine Bohrung in der Gewindebuchse geführten Messstab und einem mit dem Messstab in Wirkverbindung stehenden Weggeber bestehen, wobei der Messstab entweder mit seinem einem Ende auf dem Gewindeende des Gewindebolzens aufsteht und mit seinem anderen Ende in einem auf dem Zylinderende befestigten Halter verschiebMPa geführt ist und dort mit dem am Halter angeordneten Weggeber zusammenwirkt, oder der Messstab ist mit seinem einen Ende an einem auf dem Zylinderende befestigten Halter unverschiebbar gehalten und mit seinem anderen Ende in die Nähe des Gewindeendes des Gewindebolzens geführt, wobei der Weggeber an diesem Ende des Messstabs benachbar zum Gewindeende des Gewindebolzens angeordnet ist.

Zur Lösung der eingangs erwähnten Aufgabe dient auch ein Verfahren zum Anziehen großer Schrauben mittels der vorstehend erwähnten hydraulischen Gewindebolzenspannvorrichtung mit den Schritten:

a) Eingeben einer Soll-Schraubenvorspannkraft entsprechend einem Soll-Druck einer Druckmittelzufuhr zur Gewindebolzenspannvorrichtung oder

b) Eingeben eines Soll-Drucks einer Druckmittelzufuhr zur Gewindebolzenspannvorrichtung entsprechend einer Soll-Schraubenvorspannkraft,

c) Einschalten der Druckbeaufschlagung der Gewindebolzenspannvorrichtung und Spannen des Gewindebolzens bis auf die Soll-Schraubenvorspannkraft,

d) Abschalten der Druckbeaufschlagung der Gewindebolzenspannvorrichtung bei Erreichen der Soll-Schraubenvorspannkraft,

e) Beidrehen der Mutter zur Anlage am zu verspannenden Maschinenteil, während des Schritts c) oder nach dem Schritt d)

f) Messen der relativen Verschiebung des Gewindebolzenendes gegenüber dem Zylinder der Gewindebolzenspannvorrichtung,

g) Entlasten der Druckbeaufschlagung der Gewindebolzenspannvorrichtung,

h) erneutes Messen der relativen Verschiebung des Gewindebolzenendes gegenüber dem Zylinder der Gewindebolzenspannvorrichtung,

i) Feststellen der verbleibende Ist-Schraubenvorspannung aus den Messungen gemäß den Schritten f) und h).

Die Bedienungsperson kann die so ermittelte Schraubenvorspannung mit einer Soll-Schraubenvorspannung vergleichen, wenn beide Werte auf einem Anzeigenfeld der Steuereinrichtung für die Gewindebolzenspannvorrichtung angezeigt werden. Ist die verbleibende Ist-Schraubenvorspannung um einen vorgebbaren Betrag kleiner als die vorgegebene, verbleibende Soll-Schraubenvorspannung, kann die Bedienungsperson die Druckbeaufschlagung der hydraulischen Gewindebolzenspannvorrichtung erneut einschalten und dabei den Soll-Druck der Druckmittelzufuhr proportional zur Differenz zwischen der verbleibenden Ist-Schraubenvorspannung und der vorgegebenen, verbleibenden Soll-Schraubenvorspannung erhöhen. Dieser Soll-Druck sollte aber stets so klein sein, dass keine Dehnung des Gewindebolzens über die Elastizitätsgrenze hinaus erfolgt.

Das vorstehend definierte Verfahren lässt sich auf verschiedene Weise mit zusätzlichen Schritten durchführen. Gemäß einer ersten Variante umfasst das Verfahren die zusätzlichen bzw. alternativen Schritte:

1.1) Eingeben der Querschnittsfläche und der Klemmlänge des Gewindebolzens und Berechnen der Soll-Schraubenvorspannkraft und daraus des Soll-Drucks.

1.2) Fortsetzen mit vorerwähnten Schritten c) bis e) und den alternativen Schritten

1.3) auf Null setzen der Messvorrichtung,

1.4) Fortsetzen mit vorerwähntem Schritt g) und den alternativen Schritten:

1.5) Messen der Differenz der Verschiebung zwischen dem Zustand nach Schritt e) und nach Schritt g),

1.6) Berechnen und Anzeigen der verbleibenden Ist-Schraubenvorspannung nach der Formel:

$$F = p \times A_k - \Delta l \times E \times A/L$$

E = Elastizitätsmodul des Gewindebolzens [N/mm$^2$]
A = Querschnittsfläche des Gewindebolzens [mm$^2$]
L = Klemmlänge des Gewindebolzens [mm]
$\Delta l$ = Längendifferenz zwischen dem Zustand nach Schritt e) und nach Schritt g) [mm]
mit
p = in der Gewindebolzenspannvorrichtung wirkender Druck [MPa]
A$_k$= Kolbenfläche der Gewindebolzenspannvorrichtung [mm$^2$]

Bei diesem Verfahren wird nur die Dehaungsdifferenz $\Delta l$ gemessen, indem die Messvorrichtung bei Erreichen des Soll-Drucks auf Null gesetzt wird. Auf Grund der eingegebenen Schraubenabmessungen und der Klemmlänge lässt sich dann die verbleibende Ist-Schraubenvorspannung auf einfache Weise berechnen, da von der sich aus dem Druck und der Kolbenfläche der Gewindebolzenspannvorrichtung ergebende Schraubenvorspannung nur der sich aus der Dehnungsdifferenz ergebende Vorspannungsverlust zu subtrahieren ist.
Während die Querschnittsfläche eines mit der erfindungsgemäßen Vorrichtung und nach dem erfindungsgemäßen Verfahrens zu spannenden Gewindebolzens in der Regel bekannt ist, ist die Klemmlänge häufig unbekannt Die Klemmlänge lässt sich aus der Messung eliminieren, wenn folgende Verfahrensschritte gemäß einer zweiten Variante zusätzlich oder alternativ durchgeführt werden:

2.1) Beginnen mit den vorerwähnten Schritten a) oder b)

2.2) Einschalten der Druckbeaufschlagung der Gewindebolzenspannvorrichtung und Spannen des Gewindebolzens bis auf einen Druck von etwa 1,5 % bis 3 % des Solldrucks,

2.3) auf Null Setzen der Messvorrichtung,

2.4) Erhöhen der Druckbeaufschlagung der Gewindebolzenspannvorrichtung und Spannen des Gewindebolzens bis auf die Soll-Schraubenvorspannkraft,

2.5) Fortsetzen mit den vorerwähnten Schritten d) bis h),

2.6) Berechnen und Anzeigen der verbleibenden Ist-Schraubenvorspannung nach der Formel:

$$F = \frac{L_1}{L_2} \times p \times A_K$$

mit L$_1$ = Gewindebolzendehnung entsprechend Schritt h) [mm]

L$_2$ = Gewindebolzendehnung entsprechend Schritt f) [mm]

A$_K$= Kolbenfläche der Gewindebolzenspannvorrichtung [mm$^2$]

p = in der Gewindebolzenspannvorrichtung wirkender Druck [MPa]

Da in L$_1$ und L$_2$ die Dehnung des Gewindebolzens entsprechend Schritt 2.2) jeweils als Summanden enthalten sind, sind dadurch die Längenänderungen durch die Setzerscheinungen bis zum Fügepunkt mit genügender Genauigkeit eliminiert, so dass sich auf diese Weise die verbleibenden Ist-Schraubenvorspannung, ohne dass die Klemmlänge bekannt sein muss, berechnen lässt.
Die Genauigkeit der Ermittlung der verbleibenden Ist-Schraubenvorspannung lässt sich noch weiter erhöhen, wenn das Verfahren mit den folgenden, alternativen Schritten gemäß einer dritten Variante durchgeführt wird:

3.1) Beginnen mit den vorerwähnten Schritten a) oder b),

3.2) Einschalten der Druckbeaufschlagung der Gewindebolzenspannvorrichtung und Spannen des Gewindebolzens auf einen Druck von etwa 4 % bis 15 % des Solldrucks

3.3) auf Null Setzen der Messvorrichtung

3.4) Erhöhen der Druckbeaufschlagung der Gewindebolzenspannvorrichtung und Spannen des Gewindebolzens auf die Soll-Schraubenvorspannkraft

3.5) Fortsetzen mit den vorerwähnten Schritten d) bis h),

3.6) Erneutes Einschalten der Druckbeaufschlagung der Gewindebolzenspannvorrichtung und erneutes Spannen des Gewindebolzens auf den Druck von etwa 4 % bis 15 % des Solldrucks,

3.7) erneutes Messen der relativen Verschiebung des Gewindebolzenendes gegenüber dem Zylinder der Gewindebolzenspannvorrichtung,

3.8) Berechnen und Anzeigen der verbleibenden Ist-Schraubenvorspannung nach der Formel:

$$F = \frac{L_1 + \Delta L_1}{L_2} \; x \cdot p \; x \; A_k$$

mit

$L_1$ = Gewindebolzendehnung entsprechend Schritt h) [mm]

$L_2$ = Gewindebolzendehnung entsprechend Schritt f) [mm]

$\Delta L_1$ = Differenz zwischen der Gewindebolzendehnung entsprechend Schritt 3.7) und der Gewindebolzendehnung entsprechend h) [mm]

$A_k$ = Kolbenfläche der Gewindebolzeagannvorrichtung [mm²]

p = in der Gewindebolzenspannvorrichtung wirkender Druckmittelzufuhr [MPa].

Bei dieser Abwandlung des erfindungsgemäßen Verfahrens wird durch den Schritt 3.6) bei der die Berechnung der verbleibenden Ist-Schraubenvorspannung gemäß Schritt 3.8) die Dehnung bis zum Fügepunkt einschließlich der Setzerscheinungen vollständig eliminiert, ohne dass die Klemmlänge bekannt sein muss.

Das erfindungsgemäße Verfahren lässt sich mit den folgenden, zusätzlichen Schritten vollständig automatisieren:

j) Eingeben in die Steuereinrichtung oder Berechnen durch die Steuereinrichtung einer proportional zur Differenz zwischen der festgestellten, zu niedrigen verbleibenden Ist-Schraubenvorspannung und der vorgegebenen, verbleibenden Soll-Schraubenvorspannung erhöhten Soll-Schraubenvorspannung,
k) erneutes Einschalten der Druckbeaufschlagung der Gewindebolzenspannvorrichtung und Spannen des Gewindebolzens bis auf die erhöhte Soll-Schraubenvorspannung und
l) Wiederholen der Schritte d) bis i).

Das abgewandelte Verfahren gemäß der ersten Variante lässt sich automatisieren mit den zusätzlichen Schritten:

1.7) Eingeben in die Steuereinrichtung oder Berechnen durch die Steuereinrichtung einer proportional zur Differenz zwischen der festgestellten, zu niedrigen verbleibenden Schraubenvorspannung und einer vorgegebenen, verbleibenden Soll-Schraubenvorspannung erhöhten Soll-Schraubenvorspannunng,
1.8) erneutes Einschalten der Druckbeaufschlagung der Gewindebolzenspannvorrichtung und Spannen des Gewindebolzens bis auf die erhöhte Soll-Schraubenvorspannung, 1.9) Wiederholen der Schritte c), d), e), 1.3), 1.4), 1.5), 1.6).

Die zweite abgewandelte Variante lässt sich automatisieren, wenn die zusätzlichen Schritte: 1.7), 1.8) wie vorher und 2.7) Wiederholen der Schritte 2.2), 2.3), 2.4), 2.5), 2.6) durchgeführt werden.
Schließlich ist auch noch die dritte abgewandelte Variante zu automatisieren, wenn die zusätzlichen Schritte:

1.7) und 1.8) wie vorher und dann 3.9) Wiederholen der Schritte 3.2), 3.3), 3.4) 3.5), 3.6) 3.7), 3.8)

durchgeführt werden.
Die Erfindung wird nachstehend anhand zweier in der Zeichnung dargestellter Ausführungsbeispiele des Näheren erläutert. In der Zeichnung zeigen:

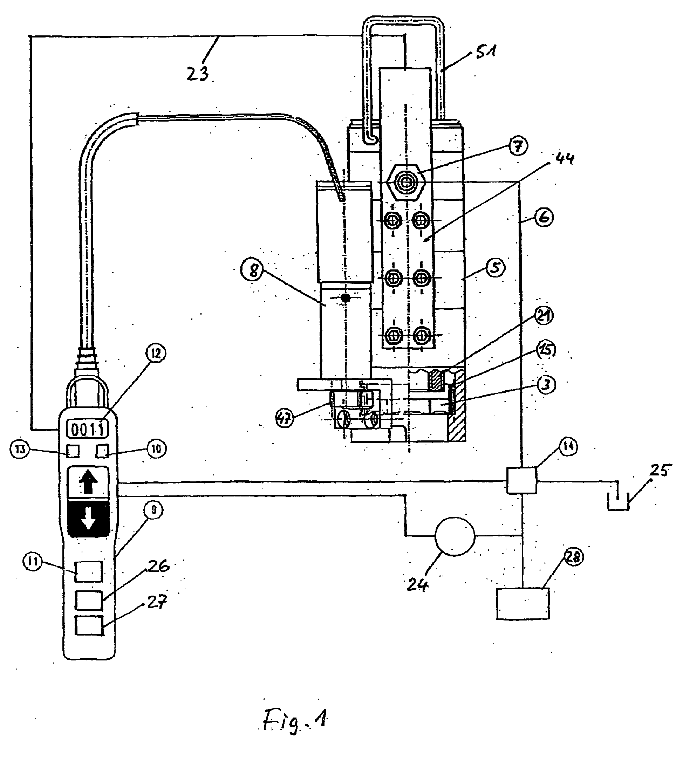

Fig. 1 eine schematische Darstellung einer erfindungsgemäßen hydraulischen Gewindebolzenspannvorrichtung mit Steuereinrichtung und Hydraulikdruckquelle,

Fig. 2 eine schematische Schnittansicht einer hydraulischen Gewindebolzenspannvorrichtung mit einer Messeinrichtung gemäß einer ersten Ausführungsform und

Fig.3 eine schematische Schnittansicht einer hydraulischen Gewindebolzenspannvorrichtung mit einer Messeseinrichtung gemäß einer zweiten Ausführungsform.

Die in den Zeichnungen dargestellte hydraulische Gewindebolzenspannvorrichtung entspricht bis auf die Messeinrichtung im Wesentlichen der DE 196 38 901 A1 derselben Anmelder.
Ein Maschinenteil 1, welches zum Beispiel ein Flansch eines Maschinengehäuses sein kann, soll mittels eines Gewindebolzens 2 und einer darauf geschraubten Mutter 3 verspannt werden. Um auf dem Gewindebolzen 2 eine genau kontrollierbare Vorspannung aufzubringen und um Torsionsmomente vom Gewindebolzen 2, die eine zusätzliche Belastung des Gewindebolzens 2 darstellen, fernzuhalten, wird die Mutter 3 zunächst nur von Hand zur Anlage an dem Maschinenteil 1 auf dem Gewindebolzen 2 aufgeschraubt. Die Länge des Gewindebolzens 2 ist so bemessen, dass über die Mutter 3 ein freies Gewindeende 4 hervorsteht.

Zum Spannen des Gewindebolzens 2 wird die Gewindebolzenspannvorrichtung über die Mutter 3, die auf dem Gewindebolzen 2 aufgeschraubt ist, gesetzt, wobei eine mit einem Innensechskant versehene Drehhülse 15 die Mutter 3 formschlüssig übergreift. Eine Gewindebuchse 21, die mit einem Spannkolben 31 im Zylinder 5 der Gewindebolzenspannvorrichtung verbunden ist, wird auf das überstehende Gewindeende 4 des Gewindebolzens 2 geschraubt, wonach die Gewindebolzenspannvorrichtung einsatzbereit ist. Eine Hydraulikpumpe 28 ist über ein elektrisches Wegeventil 14, eine Druckmittelzufuhr 6 und einen Druckmittelanschluss 7 mit der Gewindebolzenspannvorrichtung verbunden und erlaubt es, eine Druckbeaufschlagung der Druckmittelzufuhr 6 oder eine Druckentlastung zu einem Auffangbehälter 25 hin zu schalten. Die Drehhülse 15 ist mit einer Außenverzahnung versehen, in die ein Zahnrad eines Getriebes 47 eingreift. Mit dem Getriebe 47 ist ein Drehantrieb 8 verbunden, der in einen Innenvierkant 49 des Getriebes 47 eingreift. Eine Steuereinrichtung 9 ist mit dem Drehantrieb 8 und dem elektrischen Wegeventil 14 verbunden. Eine Druckmessvorrichtung 24, die den durch die Hydraulikpumpe 28 zur Druckmittelzufuhr 6 geleiteten Druck misst, ist ebenfalls mit der Steuereinrichtung 9 verbunden.

Die Steuereinrichtung 9 weist eine Eingabevorrichtung 10 für die Soll-Vorspannung des Gewindebolzens 2 oder für den Soll-Druck der Hydraulikpumpe 28 der sich daraus und der Fläche des Kolbens 31 ergibt, sowie eine Eingabevorrichtung 13 für die verbleibende Soll-Vorspannung des Gewindebolzens auf. Mittels eines Anzeigefeldes 12 lassen sich die eingegebenen Werte und die Messwerte darstellen.

Die Steuereinrichtung 9 umfasst einen Rechner 11, eine Vergleichseinrichtung 26 zum Vergleichen der festgestellten verbleibenden Ist-Schraubenvorspannung mit der verbleibenden Soll-Schraubenvorspannung und eine Steuersignaleinrichtung 27 zum Ansteuern der Druckmittelzufuhr 6 zur Gewindebolzenspannvorrichtung über das elektrische Wegeventil 14.

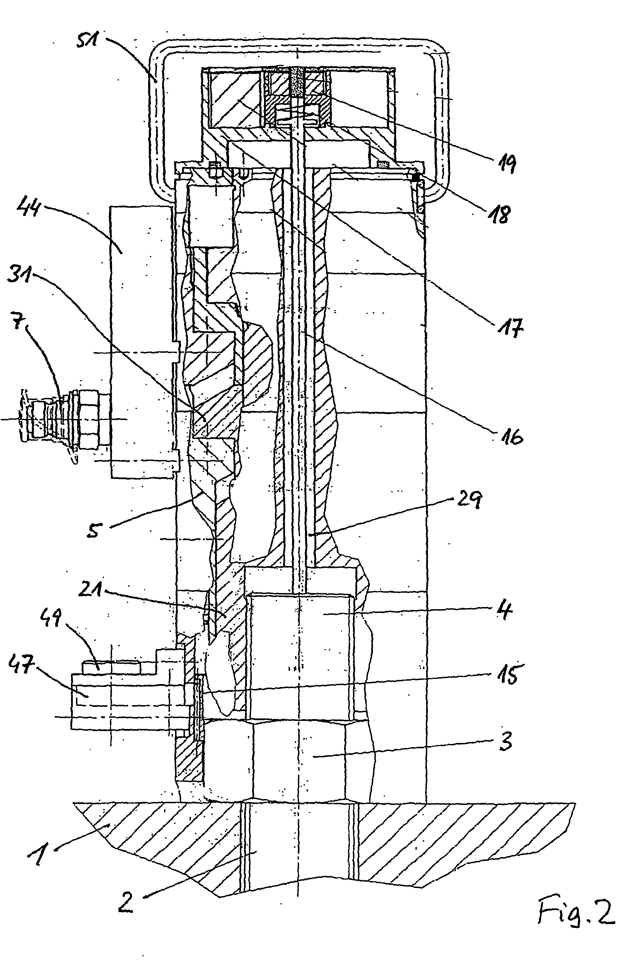

Bei der Ausführungsform gemäß Fig. 2 ist in einer zentralen Bohrung 29 der Gewindebuchse 21 ein Messstab 16 angeordnet, der auf dem Gewindeende 4 des Gewindebolzens 2 aufsteht. Das entgegengesetzte Ende des Messstabes 16 ist in einem Halter 17, der am Ende des Zylinders 5 befestigt ist, verschiebbar geführt und wird mittels einer Druckfeder 18 gegen das Gewindeende 4 des Gewindebolzens 2 gedruckt. Ein Weggeber 19, der induktiv, kapazitiv, optisch oder mechanisch wirken kann, steht in Wirkverbindung mit dem Messstab 16.

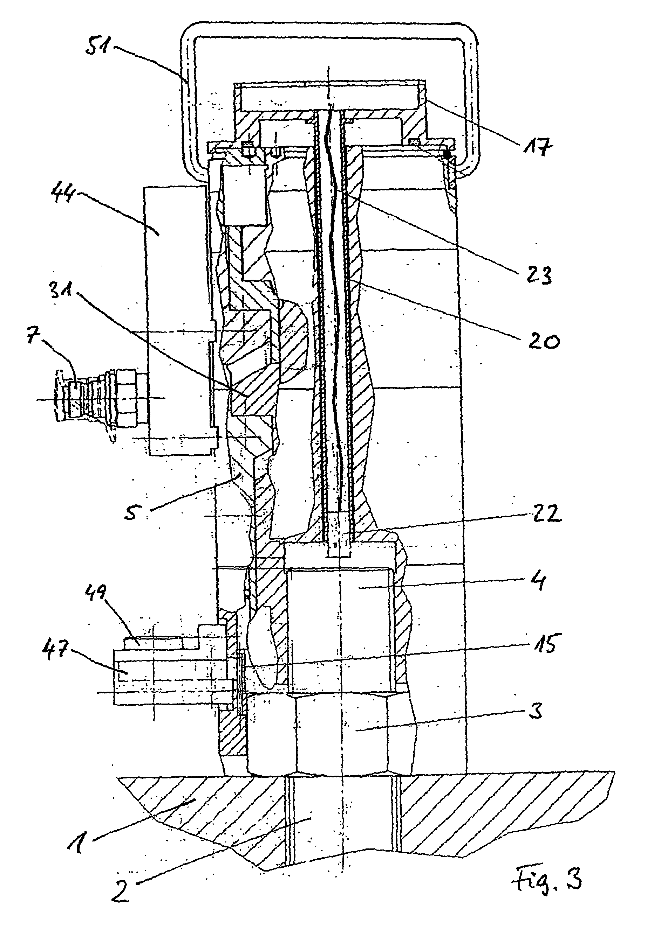

Die Ausführungsform gemäß Fig. 3 unterscheidet sich von der Ausführungsform gemäß 2 nur dadurch, dass ein Weggeber 22 benachbart zum Gewindeende 4 des Gewindebolzens 2 an einem als Halterohr 20 ausgebildeten Messstab angeordnet ist, der durch die axiale Durchgangsbohrung 29 im Zylinder 5 geführt ist. Sein zum Weggeber 22 entgegengesetztes Ende ist an einem Halter 17 unverschiebbar befestigt, und dieser Halter 17 ist am Ende des Zylinders 5 befestigt. Ein Messkabel 23 ist zur Steuereinrichtung 9 geführt.

Die Gewindebolzenspannvorrichtung lässt sich mittels eines Klappgriffs 51 ergreifen und bei besonders großen Abmessungen an einen Kranhaken anhängen.

Zum Spannen des Gewindebolzens 2 wird die Gewindebolzenspannvorrichtung in der vorbeschriebenen Weise auf den mit der Mutter 3 versehenen Gewindebolzen 2 aufgesetzt, bis zur Anlage an die Abstützfläche aufgedreht, und in die Eingabevorrichtung 10 werden die Querschnittsfläche des Gewindebolzens 2 und die Klemmlänge sowie die Soll-Schraubenvorspannkraft oder ein entsprechender Soll-Druck der Hydraulikpumpe 28 sowie in die Eingabevorrichtung 13 eine verbleibende Soll-Schraubenvorspannkraft eingegeben. Der durch die Hydraulikpumpe 28 erzeugte Hydraulikdruck von mehr als 1000 MPa wird durch den Druckmesser 24 an die Steuereinrichtung 9 übermittelt Der Rechner 11 steht mit der Steuereinrichtung 9 in Verbindung und ermittelt die Befehle zum Steuern des Spannens des Gewindebolzens 2. Wenn die eingestellte Soll-Schraubenvorspannkraft erreicht ist, wird das Wegeventil 14 geschlossen und die Mutter 3 mittels des Drehantriebs 8, der mit der Steuereinrichtung 9 verbunden ist, beigedreht, wobei durch das dabei aufgebrachte Drehmoment eine geringfügig zusätzliche Dehnung des Gewindebolzes 2 eintritt. Danach wird die vom Weggeber 19, 22 gemessene relative Verschiebung des Gewindeendes 4 des Gewindebolzens 2 gegenüber dem Zylinder 5 auf Null gesetzt, wonach die Druckentlastung der Gewindebolzenspannvorrichtung durch Ansteuern des elektrischen Wegeventils 14 mit Freigabe der Verbindung zum Auffangbehälter 25 erfolgt. Auf Grund dieser Druckentlastung ergeben sich geringfügige Setzerscheinungen zwischen dem Maschinenteil 1, dem Gewindebolzen 2 und der Mutter 3, die zu einer Verschiebung des Messstabes 16 führt, die durch den Weggeber 19 gemessen wird, oder zur Abstandsänderung des Weggebers 22 zum Gewindeende 4 proportional ist. Dementsprechend ist die Ist-Schraubenvorspannung entsprechend diesem Weg geringer als die durch den Soll-Druck der Hydraulikpumpe 28 bewirkte Schraubenvorspannung. Die verbleibende Ist-Schraubenvorspannung lässt sich nun nach der Formel:

$$F = p \ x \ A_K - \Delta l \ x \ E \ x \ A/L$$

berechnen,
mit

p = in der Gewindebolzenspannvorrichtung wirkender Druck [MPa]

$A_K$ = Kolbenfläche der Gewindebolzenspannvorrichtung [mm$^2$]

$\Delta l$ = Längendifferenz [mm]

E = Elastizitätsmodul des Gewindebolzens [N/mm$^2$]

A = Querschnittsfläche des Gewindebolzens [mm$^2$]

L = Klemmlänge des Gewindebolzens [mm]

Davon werden p und $\Delta l$ gemessen und $A_K$, E, A, L in geeigneter Form in die Steuereinrichtung eingegeben.

Liegt die verbleibende Ist-Schraubenvorspannung unterhalb einer vorgegebenen, verbleibenden Soll-Schraubenvorspannung, lässt sich die Gewindebolzenspannvorrichtung erneut mit einem etwas erhöhten Soll-Druck beaufschlagen, wonach die Mutter 3 wieder beigedreht wird und erneut eine Druckentlastung der Gewindebolzenspannvorrichtung mit gleichzeitiger Messung des Setzvorganges erfolgt.

Die verbleibende Ist-Schraubenvorspannung lässt sich auch ohne Kenntnis der Klemmlänge des Gewindebolzens allein durch Messung bestimmen, wenn der Gewindebolzen 2 mittels der Gewindebolzenspannvorrichtung durch Einschalten der Druckbeaufschlagung zunächst nur bis auf einen Vordruck von etwa 1,5 % bis 3 % des Solldrucks gespannt wird, die Messvorrichtung 16, 19; 20, 22 auf Null gesetzt wird, danach die Druckbeaufschlagung der Gewindebolzenspannvorrichtung bis auf die Soll-Schraubenvorspannkraft erhöht wird, die Mutter 3 zur Anlage am zu verspannenden Maschinenteil 1 während der Druckbeaufschlagung der Gewindebolzenspannvorrichtung oder nach dem Abschalten der Druckbeaufschlagung beigedreht wird und die relative Verschiebung des Gewindebolzenendes 4 gegenüber dem Zylinder 5 der Gewindebolzenspannvorrichtung gemessen wird. Wenn dann die Gewindebolzenspannvorrichtung entlastet und ein erneutes Messen der relativen Verschiebung des Gewindebolzenendes 4 gegenüber dem Zylinder 5 der Gewindebolzenspannvorrichtung durchgeführt wird, lässt sich die Ist-Schraubenvorspannung nach der Formel:

$$F = \frac{L_1}{L_2} \; x \; p \; x \; A_K$$

berechnen, mit

$L_1$ = Gewindebolzendehnung nach dem Entlasten der Druckbeaufschlagung der Gewindebolzenspannvorrichtung [mm]

$L_2$ = Gewindebolzendehnung bei Druckbeaufschlagung der Gewindebolzenspannvorrichtung mit dem Soll-Druck [mm]

$A_K$= Kolbenfläche der Gewindebolzenspannvorrichtung [mm$^2$]

p = Druck der Druckmittelzufuhr [MPa]

In diesem Fall geht die geringfügige Dehnung mit den Setzerscheinungen bis zum Fügepunkt als Summand sowohl in $L_1$ als auch in $L_2$ entsprechend dem ersten aufgebrachten Druck von 1,5 % bis 3 % des Solldrucks ein, ohne dass der Fügepunkt genau bestimmt werden muss.

Eine Erhöhung der Genauigkeit mit vollständiger Elimination der durch die Anfangssetzung bewirken Fehler lässt sich erreichen, wenn die Druckbeaufschlagung der Gewindebolzenspannvorrichtung und das Spannen des Gewindebolzens 2 zunächst auf einen Vordruck von etwa 4 % bis 15 % des Solldrucks erfolgen. Bei diesem Vordruck ist der Fügepunkt erfahrungsgemäß immer überschritten. Bei Erreichen dieses Vordrucks wird die Messvorrichtung 16, 19; 20, 22 auf Null gesetzt, wonach die Druckbeaufschlagung der Gewindebolzenspannvorrichtung auf den Solldruck erhöht wird und der Gewindebolzen 2 bis auf die Soll-Schraubenspannkraft gespannt wird. Nunmehr wird die Gewindebolzendehnung unter Beibehaltung der Druckbeaufschlagung und nach dem Beidrehen der Mutter 3 als Länge $L_2$ gemessen und die Druckbeaufschlagung der Gewindebolzenspannvorrichtung entlastet. Nun wird die Gewindebolzendehnung $L_1$ gemessen, wonach ein erneutes Einschalten der Druckbeaufschlagung der Gewindebolzenspannvorrichtung und ein erneutes Spannen des Gewindebolzens 2 auf desselben Vordruck von etwa 4 % bis 15 % des Solldrucks erfolgt. Die relative Verschiebung des Gewindebolzenendes 4 gegenüber dem Zylinder 5 der Gewindebolzenspannvorrichtung wird erneut gemessen, wonach alle Daten zum Berechnen der verbleibenden Ist-Schraubenvorspannung gegeben sind. Diese Berechnung erfolgt nach der Formel:

$$F = \frac{L_1 + \Delta L_1}{L_2} \; x \; p \; x \; A_k$$

Hierbei ist:

$L_1$= die Gewindebolzendehnung nach der Druckentlastung der Gewindebolzenspannvorrichtung [mm]

$\Delta L_1$ = Differenz zwischen der Gewindebolzendehnung $L_1$ und der Gewindebolzendehnung bei der Beaufschlagung mit dem Vordruck von etwa 4 % bis 15 % des Solldrucks [mm]

$L_2$ = Gewindebolzendehnung bei der Druckbeaufschlagung der Gewindebolzenspannvorrichtung mit dem Solldruck [mm]

$A_k$ =      Kolbenfläche der Gewindebolzenspannvorrichtung [mm²]

p =      Druck der Druckmittelzufuhr [MPa]

Diese Vorgänge lassen sich vollständig automatisieren, wenn in die Steuereinrichtung ein entsprechender Wert eingegeben oder vom Rechner berechnet wird, wobei als Obergrenze immer die Zugfestigkeit des Gewindebolzens mit der jeweiligen Gewindegröße und der sich hieraus ergebenden maximalen Schraubenvorspannkraft vorgegeben sein muss.

Mit der erfindungsgemäßen hydraulischen Gewindebolzenspannvorrichtung und dem damit durchführbaren Messverfahren lässt sich die verbleibende Ist-Schraubenvorspannung genau einstellen.

**Patentansprüche**

1. Hydraulische Gewindebolzenspannvorrichtung zum Anziehen und Lösen großer Schrauben mit

    - einer Druckmittelzufuhr (6) zur Gewindebolzenspannvorrichtung,
    - einem Druckmittelanschluss (7) an der Gewindebolzenspannvorrichtung
    - einem sich auf einem mittels eines Gewindebolzens (2) und einer Mutter (3) zu verspannenden Maschinenteil (1) abstützenden Zylinder (5),
    - wenigstens einem darin abgedichtet geführten, sich an einer am Gewindeende (4) des Gewindebolzens (2) aufgeschraubten Gewindebuchse (21) abstützenden, periodisch druckbeaufschlagten Kolben (31),
    - einer Steuereinrichtung (9) zum Ansteuern der Druckmittelzufuhr (6) zur Gewindebolzenspannvorrichtung und zum Abschalten der Druckmittelzufuhr (6) nach Erreichen eines einer Soll-Votspannkraft entsprechenden Soll-Drucks,
    - einer Eingabevorrichtung (10) für die Soll-Schraubenvorspannkraft oder den entsprechenden Soll-Druck der Druckmittelzufuhr (6)
    - einer Messeinrichtung (16, 19; 20, 22) zum Messen der relativen Verschiebung des Gewindeendes (4) des Gewindebolzens (2) gegenüber dem Zylinder (5) und **dadurch gekennzeichnet, dass** die Gewindebolzenspannvorrichtung zusätzlich enthält:
    - einer Auswerteeinrichtung (11) zum Ermitteln der verbleibenden Ist-Schraubenvorspannung nach Druckentlastung der Gewindebolzenspannvorrichtung.

2. Gewindebolzenspannvorrichtung nach Anspruch 1, bei der die Auswerteeinrichtung (11) und eine Eingabevorrichtung (13) für eine verbleibende Soll-Schraubenspannkraft mit der Steuereinrichtung (9) verbunden sind und eine Vergleichseinrichtung (26) zum Vergleichen der festgestellten, verbleibenden Ist-Schraubenvorspannung mit einer verbleibenden Soll-Schraubenvorspannung aufweist.

3. Gewindebolzenspannvorrichtung nach Anspruch 2, bei der die Auswerteeinrichtung (11) eine Steuersignaleinrichtung (27) zum Ansteuern der Druckmittelzufuhr (6) zur Gewindebolzenspannvorrichtung über die Steuereinrichtung (9) zur erneuten Druckbeaufschlagung der Gewindebolzenspannvorrichtung mit einem erhöhten Solldruck, falls die festgestellte, verbleibende Ist-Schraubenvorspannung unterhalb eines vorgegebenen Soll-Werts liegt.

4. Gewindebolzenspannvorrichtung nach einem der Ansprüche 1 bis 3, bei der die Messeinrichtung (16, 19; 20, 22) aus einem durch eine Bohrung (29) in der Gewindebuchse (21) geführten Messstab (16; 20) und einen mit dem Messstab (16; 20) in Wirkverbindung stehenden Weggeber (19; 22) besteht.

5. Gewindebolzenspannvorrichtung nach Anspruch 4, bei der der Messstab (16) mit seinem einen Ende auf dem Gewindeende (4) des Gewindebolzens (2) aufsteht und mit seinem anderen Ende in einem auf dem Zylinderende befestigten Halter (17) verschiebbar geführt ist und dort mit dem am Halter (17) angeordneten Weggeber (19) zusammenwirkt.

6. Gewindebolzenspannvorrichtung nach Anspruch 4, bei der der Messstab (20) mit seinem einem Ende an einem auf dem Zylinderende befestigten Halter (17) unverschiebbar gehalten und mit seinem anderen Ende in die Nähe des Gewindeendes (4) des Gewindebolzens (2) geführt ist und der Weggeber (22) an diesem Ende des Messstabs (20) angeordnet ist.

7. Verfahren zum Anziehen großer Schrauben mittels der hydraulischen Gewindebolzenspannvorrichtung gemäß einem der Ansprüche 1 bis 6 mit den Schritten:

    a) Eingeben einer Soll-Schraubenvorspannkraft entsprechend einem Soll-Druck einer Druckmittelzufuhr zur Gewindebolzenspannvorrichtung, oder
    b) Eingeben eines Soll-Drucks einer Druckmittelzufuhr zur Gewindebolzenspannvorrichtung entsprechend einer Soll-Schraubenvorspannkraft,
    c) Einschalten der Druckbeaufschlagung der Gewindebolzenspannvorrichtung und Spannen des Gewindebolzens bis auf die Soll-Schraubenvorspannkraft
    d) Abschalten der Druckbeaufschlagung der Gewindebolzenspannvorrichtung bei Erreichen der Soll-Schraubenvorspannkraft,

e) Beidrehen der Mutter zur Anlage am zu verspannenden Maschinenteil, während des Schritts c) oder nach dem Schritt d),

f) Messen der relativen Verschiebung des Gewindebolzenendes gegenüber dem Zylinder der Gewindebolzenspannvorrichtung,

g) Entlasten der Druckbeaufschlagung der Gewindebolzenspannvorrichtung, **dadurch gekennzeichnet, dass** das Verfahren zusätzlich die folgenden Schritte enthält:

h) Erneutes Messen der relativen Verschiebung des Gewindebolzenendes gegenüber dem Zylinder der Gewindebolzenspannvorrichtung.

i) Feststellen der verbleibenden Ist-Schraubenvorspanndung aus den Messungen gemäß den Schritten f) und h)

8. Verfahren nach Anspruch 7, mit den zusätzlichen Schritten:

1.1) Eingeben der Querschnittsfläche und der Klemmlänge des Gewindebolzens 1.2) Fortsetzen mit den Schritten c) bis e) und den alternativen Schritten: 1.3) auf Null Setzen der Messvorrichtung

1.4) Fortsetzen mit Schritt g) und den alternativen Schritten: 1.5) Messen der Differenz der Verschiebung zwischen dem Zustand nach Schritt e) und nach Schritt g)

1.6) Berechnen und Anzeigen der verbleibenden Ist-Schraubenverspannung nach der Formel:

$$F = p \times A_K - \Delta l \times E \times A/L$$

mit

p = in der Gewindebolzenspannvorrichtung wirkender Druck [MPa]

$A_K$ = Kolbenfläche der Gewindebolzenspannvorrichtung [mm$^2$]

$\Delta l$= Längendifferenz gemäß Schritt 1.5) [mm]

E = Elastizitätsmodul des Gewindebolzens [N/mm$^2$]

$A_K$= Querschnittsfläche des Gewindebolzens [mm$^2$]

L = Klemmlänge des Gewindebolzens [mm]

9. Verfahren nach Anspruch 7, mit den alternativen Schritten:

2.1) Beginnen mit den Schritten a) oder b)

2.2) Einschalten der Druckbeaufschlagung der Gewindebolzenspannvorrichtung und Spannen des Gewindebolzens bis auf einen Druck von etwa 1,5 % bis 3 % des Solldrucks.

2.3) auf Null Setzen der Messvorrichtung

2.4) Erhöhen der Druckbeaufschlagung der Gewindebolzenspannvorrichtung und Spannen des Gewindebolzens bis auf die Soll-Schraubenvorspannkraft, 2.5) Fortsetzen mit den Schritten d) bis h)

2.6) Berechnen und Anzeigen der verbleibenden Ist-Schraubenvorspannung nach der Formel:

$$F \;=\; \frac{L_1}{L_2} \; \times p \times A_K$$

mit

$L_1$ = Gewindebolzendehnung, entsprechend Schritt h) [mm]

$L_2$ = Gewindebolzendehnung, entsprechend Schritt f) [mm]

$A_k$ = Kolbenfläche der Gewindebolzenspannvorrichtung [mm$^2$]

p = Druck der Druckmittelzufuhr [MPa]

10. Verfahren nach Anspruch 7, mit den Schritten:

3.1) Beginnen mit den Schritten a) oder b)

3.2) Einschalten der Druckbeaufschlagung der Gewindebolzenspannvorrichtung und Spannen des Gewindebolzens auf einen Druck von etwa 4 % bis 15 % des Solldrucks

3.3) auf Null Setzen der Messvorrichtung

3.4) Erhöhen der Druckbeaufschlagung der Gewindebolzenspannvorrichtung und Spannen des Gewindebolzens bis auf die Soll-Schraubenvorspannkraft,

3.5) Fortsetzen mit den Schritten d) bis h)

3.6) erneutes Einschalten der Druckbeaufschlagung der Gewindebolzenspannvorrichtung und erneutes Spannen des Gewindebolzens auf den Druck von etwa 4 % bis 15 % des Soll- Drucks

3.7) erneutes Messen der relativen Verschiebung des Gewindebolzenendes gegenüber dem Zylinder der Gewindebolzenspannvorrichtung

3.8) Berechnen und Anzeigen der verbleibenden Ist-Schraubenvorspannung nach der Formel:

$$F = \frac{L_1 + \Delta L_1}{L_2} \times p \times A_k$$

mit

$L_1$ = Gewindebolzendehnung, entsprechend Schritt h) [mm]

$\Delta L_1$ = Differenz zwischen der Gewindebolzendehnung entsprechend Schritt 3.7) und der Gewindebolzendehnung, entsprechend Schritt h) [mm]

$L_2$ = Gewindebolzendehnung entsprechend Schritt f) [mm]

$A_k$ = Kolbenfläche der Gewindebolzenspannvorrichtung [mm$^2$]

p = Druck der Druckmittelzufuhr[MPa]

11. Verfahren nach Anspruch 7, mit den zusätzlichen Schritten:

j) Eingeben in die Steuereinrichtung oder Berechnen durch die Steuereinrichtung einer proportional zur Differenz zwischen einer festgestellten, zu niedrigen, verbleibenden Schraubenvorspannung und einer vorgegebenen, verbleibenden Soll-Schraubenvorspannung erhöhten Soll-Schraubenvorspannung,

k) Erneutes Einschalten der Druckbeaufschlagung der Gewindebolzenspannvorrichtung und Spannen des Gewindebolzens bis auf die erhöhte Soll-Schraubenvorspannung,

l) Wiederholen der Schritte d) bis i).

12. Verfahren nach Anspruch 8 mit den zusätzlichen Schritten:

1.7) Eingeben in die Steuereinrichtung oder Berechnen durch die Steuereinrichtung einer proportional zur Differenz zwischen einer festgestellten, zu niedrigen, verbleibenden Schraubenvorspannung und einer vorgegebenen, verbleibenden Soll-Schraubenvorspannung erhöhten Soll-Schraubenvorspannung,

1.8) Erneutes Einschalten der Druckbeaufschlagung der Gewindebolzenspannvorrichtung und Spannen des Gewindebolzens bis auf die erhöhte Soll-Schraubenvorspannung,

1.9) Wiederholen der Schritte c), d), e), 1.3), 1.4), 1.5), 1.6)

13. Verfahren nach Anspruch 9 mit den zusätzlichen Schritten:

1.7) Eingeben in die Steuereinrichtung oder Berechnen durch die Steuereinrichtung einer proportional zur Differenz zwischen einer festgestellten, zu niedrigen, verbleibenden Schraubenvorspannung und einer vorgegebenen, verbleibenden Soll-Schraubenvorspannung erhöhten Soll-Schraubenvorspannung,

1.8) Erneutes Einschalten der Druckbeaufschlagung der Gewindebolzenspannvorrichtung und Spannen des Gewindebolzens bis auf die erhöhte Soll-Schraubenvorspannung,

2.7) Wiederholen der Schritte 2.2), 2.3), 2.4), 2.5), 2.6)

14. Verfahren nach Anspruch 10 mit den zusätzlichen Schritten:

1.7) Eingeben in die Steuereinrichtung oder Berechnen durch die Steuereinrichtung einer proportional zur Differenz zwischen einer festgestellten, zu niedrigen, verbleibenden Schraubenvorspannung und einer vorgegebenen, verbleibenden Soll-Schraubenvorspannung erhöhten Soll-Schraubenvorspannung,

1.8) Erneutes Einschalten der Druckbeaufschlagung der Gewindebolzenspannvorrichtung und Spannen des Gewindebolzens bis auf die erhöhte Soll-Schraubenvorspannung,

3.9) Wiederholen der Schritte 3.2), 3.3), 3.4) 3.5), 3.6), 3.8)

**Claims**

1. Hydraulic threaded bolt tightening device for tightening and loosening large screws, comprising

- a pressure medium supply (6) to the threaded bolt tightening device,

- a pressure medium connection (7) to the threaded bolt tightening device,

- a cylinder (5) supported against a machine part (1) that is to be clamped by means of a threaded bolt (2) and a nut (3),

- at least one piston (31) which is guided sealingly therein and which is supported against a threaded bushing (21) screwed onto the threaded end (4) of the threaded bolt (2), pressure being periodically applied to said piston,

- a control device (9) for actuating the pressure medium supply (6) to the threaded bolt tightening device and for switching off the pressure medium supply (6) once a nominal pressure corresponding to a nominal pretensioning force has been reached,

- an input device (10) for the nominal screw pretensioning force or the corresponding nominal pressure of the pressure medium supply (6),

- a measuring device (16, 19; 20, 22) for measuring the relative displacement of the threaded end (4) of the threaded bolt (2) relative to the cylinder (5),

**characterised in that** the threaded bolt tightening device additionally contains:

- an evaluation device (11) for determining the residual actual screw pretension once the pressure of the threaded bolt tightening device has been released.

2. Threaded bolt tightening device according to claim 1, in which the evaluation device (11) and an input device (13) for a residual nominal screw tightening force are connected to the control device (9) and has a comparison device (26) for comparing the ascertained residual actual screw pretension with a residual nominal screw pretension.

3. Threaded bolt tightening device according to claim 2, in which the evaluation device (11) has a control signal device (27) for actuating the pressure medium supply (6) to the threaded bolt tightening device via the control device (9) in order to re-pressurise the threaded bolt tightening device with an increased nominal pressure if the ascertained residual actual screw pretension is below a predefined nominal value.

4. Threaded bolt tightening device according to one of claims 1 to 3, in which the measuring device (16, 19; 20, 22) consists of a measuring rod (16; 20) passed through a bore (29) in the threaded bushing (21) and of a travel sensor (19; 22) actively connected to the measuring rod (16; 20).

5. Threaded bolt tightening device according to claim 4, in which the measuring rod (16) rests with its one end against the threaded end (4) of the threaded bolt (2) and with its other end is displaceably guided in a holder (17) attached to the cylinder end and interacts there with the travel sensor (19) arranged on the holder (17).

6. Threaded bolt tightening device according to claim 4, in which the measuring rod (20) is non-displaceably held with its one end on a holder (17) attached to the cylinder end and with its other end is guided into the vicinity of the threaded end (4) of the threaded bolt (2), and the travel sensor (22) is arranged at this end of the measuring rod (20).

7. Method for tightening large screws by means of the hydraulic threaded bolt tightening device according to one of claims 1 to 6, comprising the steps:

a) inputting a nominal screw pretensioning force according to a nominal pressure of a pressure medium supply to the threaded bolt tightening device, or

b) inputting a nominal pressure of a pressure medium supply to the threaded bolt tightening device according to a nominal screw pretensioning force,

c) switching on the pressurisation of the threaded bolt tightening device and tightening the threaded bolt up to the nominal screw pretensioning force,

d) switching off the pressurisation of the threaded bolt tightening device when the nominal screw pretensioning force is reached,

e) during step c) or after step d), tightening the nut until it comes to bear against the machine part to be clamped,

f) measuring the relative displacement of the threaded bolt end relative to the cylinder of the threaded bolt tightening device,

g) releasing the pressure of the threaded bolt tightening device,

**characterised in that** the method additional contains the following steps:

h) measuring again the relative displacement of the threaded bolt end relative to the cylinder of the threaded bolt tightening device,

i) ascertaining the residual actual screw pretension from the measurements according to steps f) and h).

8. Method according to claim 7, comprising the additional steps:

1.1) inputting the cross-sectional area and the clamping length of the threaded bolt,

1.2) continuing with steps c) to e) and the alternative steps:

1.3) setting the measuring device to zero,

1.4) continuing with step g) and the alternative steps:

1.5) measuring the difference in the displacement between the state after step e) and after step g),

1.6) calculating and displaying the residual actual screw pretension according to the formula:

$$F = p \times A_K - \Delta l \times E \times A/L$$

where

p = pressure acting in the threaded bolt tightening device [MPa]

$A_K$ = piston surface area of the threaded bolt tightening device [mm$^2$]

$\Delta l$ = difference in length according to step 1.5) [mm]

E = modulus of elasticity of the threaded bolt [N/mm$^2$]

$A_K$ = cross-sectional area of the threaded bolt [mm$^2$]

L = clamping length of the threaded bolt [mm].

9. Method according to claim 7, comprising the alternative steps:

2.1) beginning with steps a) or b),

2.2) switching on the pressurisation of the threaded bolt tightening device and tightening the threaded bolt up to a pressure of approximately 1.5% to 3% of the nominal pressure,

2.3) setting the measuring device to zero,

2.4) increasing the pressurisation of the threaded bolt tightening device and tightening the threaded bolt up to the nominal screw pretensioning force,

2.5) continuing with steps d) to h),

2.6) calculating and displaying the residual actual screw pretension according to the formula:

$$F = \frac{L_1}{L_2} \times p \times A_K$$

where

$L_1$ = threaded bolt strain according to step h) [mm]

$L_2$ = threaded bolt strain according to step f) [mm]

$A_K$ = piston surface area of the threaded bolt tightening device [mm$^2$]

p = pressure of the pressure medium supply [MPa].

10. Method according to claim 7, comprising the steps:

3.1) beginning with steps a) or b),

3.2) switching on the pressurisation of the threaded bolt tightening device and tightening the threaded bolt up to a pressure of approximately 4% to 15% of the nominal pressure,

3.3) setting the measuring device to zero,

3.4) increasing the pressurisation of the threaded bolt tightening device and tightening the threaded bolt up to the nominal screw pretensioning force,

3.5) continuing with steps d) to h),

3.6) switching on again the pressurisation of the threaded bolt tightening device and tightening the threaded bolt up to the pressure of approximately 4% to 15% of the nominal pressure,

3.7) measuring again the relative displacement of the threaded bolt end relative to the cylinder of the threaded bolt tightening device,

3.8) calculating and displaying the residual actual screw pretension according to the formula:

$$F = \frac{L_1 + \Delta L_1}{L_2} \times p \times A_k$$

where

$L_1$ = threaded bolt strain according to step h) [mm]

$\Delta L_1$ = difference between the threaded bolt strain according to step 3.7) and the threaded bolt strain according to step h) [mm]

$L_2$ = threaded bolt strain according to step f) [mm]

$A_K$ = piston surface area of the threaded bolt tightening device [mm$^2$]

p = pressure of the pressure medium supply [MPa].

11. Method according to claim 7, comprising the additional steps:

j) inputting into the control device or calculating by means of the control device a nominal screw pretension which is increased proportionally to the difference between an ascertained residual screw pretension that is too low and a predefined residual nominal screw pretension,

k) switching on again the pressurisation of the threaded bolt tightening device and tightening the threaded bolt up to the increased nominal screw pretension,

l) repeating steps d) to i).

12. Method according to claim 8, comprising the additional steps:

1.7) inputting into the control device or calculating by means of the control device a nominal screw pretension which is increased proportionally to the difference between an ascertained residual screw pretension that is too low and a predefined residual nominal screw pretension,

1.8) switching on again the pressurisation of the threaded bolt tightening device and tightening the threaded bolt up to the increased nominal screw pretension,

1.9) repeating steps c), d), e), 1.3), 1.4), 1.5), 1.6).

**13.** Method according to claim 9, comprising the additional steps:

1.7) inputting into the control device or calculating by means of the control device a nominal screw pretension which is increased proportionally to the difference between an ascertained residual screw pretension that is too low and a predefined residual nominal screw pretension,

1.8) switching on again the pressurisation of the threaded bolt tightening device and tightening the threaded bolt up to the increased nominal screw pretension,

2.7) repeating steps 2.2), 2.3), 2.4), 2.5), 2.6).

**14.** Method according to claim 10, comprising the additional steps:

1.7) inputting into the control device or calculating by means of the control device a nominal screw pretension which is increased proportionally to the difference between an ascertained residual screw pretension that is too low and a predefined residual nominal screw pretension,

1.8) switching on again the pressurisation of the threaded bolt tightening device and tightening the threaded bolt up to the increased nominal screw pretension,

3.9) repeating steps 3.2), 3.3), 3.4), 3.5), 3.6), 3.8).

**Revendications**

**1.** Dispositif hydraulique de serrage de boulon fileté pour le serrage et le desserrage de grandes vis comprenant

- une arrivée d'agent de pression (6) pour le dispositif de serrage de boulon fileté,
- un branchement d'agent de pression (7) sur le dispositif de serrage de boulon fileté,
- un cylindre (5) s'appuyant sur une partie de machine (1) à serrer au moyen d'un boulon fileté (2) et d'un écrou (3),
- au moins un piston (31) guidé à l'intérieur de façon étanche, s'appuyant sur une douille filetée (21) vissée sur l'extrémité filetée (4) du boulon fileté (2), mis sous pression de façon périodique,
- un dispositif de commande (9) pour l'actionnement de l'arrivée d'agent de pression (6) au dispositif de serrage de boulon fileté et pour la déconnexion de l'arrivée d'agent de pression (6) après avoir atteint une pression théorique correspondant à la force de précontrainte théorique,

- un dispositif d'entrée (10) pour la force de précontrainte de vis théorique ou la pression théorique correspondante de l'arrivée d'agent de pression (6),
- un système de mesure (16, 19 ; 20, 22) pour la mesure du déplacement relatif de l'extrémité filetée (4) du boulon fileté (2) par rapport au cylindre (5) et **caractérisé en ce que** le dispositif de serrage de boulon fileté contient en supplément :
- un dispositif d'analyse (11) pour la détermination de la précontrainte de vis réelle restante après la décharge de pression du dispositif de serrage de boulon fileté.

**2.** Dispositif de serrage de boulon fileté selon la revendication 1, sur lequel le dispositif d'analyse (11) et un dispositif d'entrée (13) pour une force de précontrainte de vis théorique restante sont reliés au dispositif de commande (9) et qui présente un dispositif de comparaison (26) pour la comparaison de la précontrainte de vis réelle restante et constatée avec une tension de précontrainte de vis théorique restante.

**3.** Dispositif de serrage de boulon fileté selon la revendication 2, sur lequel le système d'analyse (11) présente un dispositif de signal de commande (27) pour l'activation de l'arrivée d'agent de pression (6) pour le dispositif de serrage de boulon fileté par l'intermédiaire du dispositif de commande (9) pour la mise sous pression renouvelée du dispositif de serrage de boulon fileté avec une pression théorique élevée dans le cas où la précontrainte de vis réelle et constatée est inférieure à une valeur théorique prédéfinie.

**4.** Dispositif de serrage de boulon fileté selon l'une quelconque des revendications 1 à 3, sur lequel le système de mesure (16, 19 ; 20, 22) comprend une barre de mesure (16 ; 20) guidée à travers un perçage (29) dans le boulon fileté (21) et un capteur de course (19 ; 22) en liaison active avec la barre de mesure (16 ; 20).

**5.** Dispositif de serrage de boulon fileté selon la revendication 4, sur lequel la barre de mesure (16) est disposée par l'une de ses extrémités sur l'extrémité fileté (4) du boulon fileté (2) et est guidée de façon coulissante par son autre extrémité dans un support (17) fixé sur l'extrémité de cylindre et coopère ici avec le capteur de course (19) disposé sur le support (17).

**6.** Dispositif de serrage de boulon fileté selon la revendication 4, sur lequel la barre de mesure (20) est maintenue de façon non coulissante par l'une de ses extrémités sur un support (17) fixé sur l'extrémité de cylindre et est guidée par son autre extrémité à proximité de l'extrémité filetée (4) du boulon fileté (2) et le capteur de course (22) est disposé sur cette extrémité de la barre de mesure (20).

7. Procédé pour serrer des grandes vis au moyen du dispositif hydraulique de serrage de boulon fileté selon l'une quelconque des revendications 1 à 6 comprenant les étapes suivantes :

a) entrée d'une force de précontrainte de vis théorique en fonction d'une pression théorique d'une arrivée d'agent de pression au dispositif de serrage de boulon fileté, ou
b) entrée d'une pression théorique d'une arrivée d'agent de pression au dispositif de serrage du boulon fileté en fonction d'une force de précontrainte de vis théorique,
c) enclenchement de la mise sous pression du dispositif de serrage de boulon fileté et serrage du boulon fileté jusqu'à la force de précontrainte de vis théorique,
d) déconnexion de la mise sous pression du dispositif de serrage de boulon fileté lorsque la force de précontrainte de vis théorique est atteinte,
e) serrage de l'écrou pour l'application sur la partie de machine à serrer, pendant l'étape c) ou après l'étape d),
f) mesure du déplacement relatif de l'extrémité du boulon fileté par rapport au cylindre du dispositif de serrage de boulon fileté,
g) décharge de la mise sous pression du dispositif de serrage de boulon fileté, **caractérisé en ce que** le procédé contient en supplément les étapes suivantes :
h) nouvelle mesure du déplacement relatif de l'extrémité du boulon fileté par rapport au cylindre du dispositif de serrage de boulon fileté,
i) détermination de la précontrainte de vis réelle restante à partir des mesures selon les étapes f) et h).

8. Procédé selon la revendication 7, comprenant les étapes supplémentaires suivantes :

1.1) entrée de la surface de section et de la longueur de serrage du boulon fileté
1.2) poursuite avec les étapes c) à e) et les étapes alternatives : 1.3) placement sur zéro du dispositif de mesure
1.4) poursuite avec l'étape g) et les étapes alternatives : 1.5) mesure de la différence de déplacement entre l'état après l'étape e) et après l'étape g)
1.6) calcul et affichage de la précontrainte de vis réelle restante selon la formule

$$F = p \times A_K - \Delta l \times E \times A/L$$

avec

p = pression agissant dans le dispositif de serrage de boulon fileté [MPa]
$A_K$ = surface de piston du dispositif de serrage de boulon fileté [mm$^2$]
$\Delta l$ = différence de longueur selon l'étape 1.5) [mm]
E = module d'élasticité du boulon fileté [N/mm$^2$]
$A_K$ = surface de section du boulon fileté [mm$^2$]
L = longueur de blocage du boulon fileté [mm]

9. Procédé selon la revendication 7, comprenant les étapes alternatives suivantes :

2.1) démarrage avec les étapes a) ou b)
2.2) enclenchement de la mise sous pression du dispositif de serrage du boulon fileté et serrage du boulon fileté jusqu'à une pression représentant environ 1,5 % à 3 % de la pression théorique.
2.3) placement sur zéro du dispositif de mesure
2.4) élévation de la mise sous pression du dispositif de serrage de boulon fileté et serrage du boulon fileté jusqu'à la force de précontrainte de vis théorique
2.5) poursuite avec les étapes d) à h)
2.6) calcul et affichage de la précontrainte de vis réelle restante selon la formule suivante

$$F = L_1/L_2 \times p \times A_K$$

avec

$L_1$ = allongement du boulon fileté, selon l'étape h) [mm]
$L_2$ = allongement du boulon fileté, selon l'étape f) [mm]
$A_K$ = surface de piston du dispositif de serrage de boulon fileté [mm$^2$]
p = pression de l'arrivée d'agent de pression [MPa]

10. Procédé selon la revendication 7, comprenant les étapes suivantes :

3.1) démarrage avec les étapes a) ou b)
3.2) enclenchement de la mise sous pression du dispositif de serrage du boulon fileté et serrage du boulon fileté jusqu'à une pression représentant environ 4 % à 15 % de la pression théorique.

3.3) placement sur zéro du dispositif de mesure

3.4) élévation de la mise sous pression du dispositif de serrage de boulon fileté et serrage du boulon fileté jusqu'à la force de contrainte de vis théorique

3.5) poursuite avec les étapes d) à h)

3.6) nouvel enclenchement de la mise sous pression du dispositif de serrage de boulon fileté et nouveau serrage du boulon fileté jusqu'à la pression représentant environ 4 % à 15 % de la pression théorique.

3.7) nouvelle mesure du déplacement relatif de l'extrémité du boulon fileté par rapport au cylindre du dispositif de serrage de boulon fileté

3.8) calcul et affichage de la précontrainte de vis réelle restante selon la formule suivante :

$$F = (L_1 + \Delta L_1) / (L_2) \times p \times A_k$$

avec

L_1 = allongement du boulon fileté, selon l'étape h) [mm]

$\Delta$ L_1 = différence entre l'allongement du boulon fileté selon l'étape 3.7 et l'allongement du boulon fileté selon l'étape h) [mm]

L_2 = allongement du boulon fileté selon l'étape f) [mm]

A_k = surface de piston du dispositif de serrage de boulon fileté [mm²]

p = pression de l'arrivée d'agent de pression [MPa]

11. Procédé selon la revendication 7, comprenant les étapes suivantes :

j) entrée dans le dispositif de commande ou calcul par le dispositif de commande d'une précontrainte de vis théorique élevée proportionnellement à la différence entre une précontrainte de vis restante, constatée et trop faible, et une précontrainte de vis théorique prédéfinie et restante,

k) enclenchement renouvelé de la mise sous pression du dispositif de serrage de boulon fileté et serrage du boulon fileté jusqu'à la précontrainte de vis théorique élevée,

l) répétition des étapes d) à i).

12. Procédé selon la revendication 8, présentant les étapes supplémentaires suivantes :

1.7) entrée dans le dispositif de commande ou calcul par le dispositif de commande d'une précontrainte de vis théorique élevée proportionnellement à la différence entre une précontrainte de vis restante, constatée et trop faible, et une précontrainte de vis théorique prédéfinie et restante,

1.8) nouvel enclenchement de la mise sous pression du dispositif de serrage de boulon fileté et serrage du boulon fileté jusqu'à la précontrainte de vis théorique élevée.

1.9) répétition des étapes c), d), e) 1.3), 1.4), 1.5), 1.6)

13. Procédé selon la revendication 9 avec les étapes supplémentaires suivantes :

1.7) entrée dans le dispositif de commande ou calcul par le dispositif de commande d'une précontrainte de vis théorique élevée proportionnellement à la différence entre une précontrainte de vis restante, constatée et trop faible, et une précontrainte de vis théorique restante et prédéfinie,

1.8) enclenchement renouvelé de la mise sous pression du dispositif de serrage de boulon fileté et serrage du boulon fileté jusqu'à la précontrainte de vis théorique élevée,

2.7) répétition des étapes 2.2), 2.3), 2.4), 2.5), 2.6)

14. Procédé selon la revendication 10 présentant les étapes supplémentaires suivantes :

1.7) entrée dans le dispositif de commande ou calcul par le dispositif de commande d'une précontrainte de vis théorique élevée proportionnellement à la différence entre une précontrainte de vis restante, constatée et trop faible, et une précontrainte de vis théorique prédéfinie et restante,

1.8) enclenchement renouvelé de la mise sous pression du dispositif de serrage de boulon fileté et serrage du boulon fileté jusqu'à la précontrainte de vis théorique élevée.

3.9) répétition des étapes 3.2), 3.3, 3.4), 3.5), 3.6), 3.8)

Fig. 1

51

44

31

7

5

21

49

47

1

2

19

18

17

16

29

4

15

3

Fig.2

Fig. 3

**EP 1 866 123 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5257207 A
- DE 2846668 A1
- DE 10145847 A1
- DE 19638901 A1